# EUROPÄISCHE PATENTSCHRIFT

(11) **EP 1 551 534 B1**
(45) Veröffentlichungstag und Bekanntmachung des Hinweises auf die Patenterteilung: **12.03.2008**
(21) Anmeldenummer: 03809288.8
(22) Anmeldetag: 17.10.2003
(51) Int. Cl.: B01D 53/94, F01N 3/28, B01J 35/10, B01J 37/02

(54) **KATALYSATOR-TRÄGERKÖRPER MIT PASSIVIERUNGSSCHICHT SOWIE VERFAHREN ZU DESSEN HERSTELLUNG**
CATALYST CARRIER BODY COMPRISING A PASSIVATION LAYER, AND METHOD FOR THE PRODUCTION THEREOF
PORTEUR DE CATALYSEUR DOTE D'UNE COUCHE DE PASSIVATION ET SON PROCEDE DE PRODUCTION

(30) Priorität: 18.10.2002 DE 10251624
(43) Veröffentlichungstag der Anmeldung: 13.07.2005
(73) Patentinhaber: Emitec Gesellschaft für Emissionstechnologie mbH, 53797 Lohmar (DE)
(72) Erfinder: RECK, Alfred, 51515 Kürten (DE); MENGELBERG, Markus, 51491 Overath (DE); VOIT, Michael, 51375 Leverkusen (DE); KURTH, Ferdi, 53894 Mechernich (DE); ALTHÖFER, Kait, 51674 Wiehl (DE)
(74) Vertreter: Kahlhöfer, Hermann
(86) Internationale Anmeldenummer: PCT/EP2003/011503
(87) Internationale Veröffentlichungsnummer: WO 2004/037394

(56) Entgegenhaltungen:
- EP-A- 0 659 480
- WO-A-01/79669
- DE-A- 4 132 534
- US-A1- 2002 081 251
- US-A1- 2002 128 151

## Beschreibung

Die vorliegende Erfindung betrifft einen Katalysator-Trägerkörper, welcher zumindest ein Gehäuse mit einer Innenseite und einen Wabenkörper umfasst, sowie Verfahren zur Herstellung von Katalysator- Trägerkörpern. Derartige Katalysator-Trägerkörper werden insbesondere zur Reinigung von Abgasen mobiler Verbrennungskraftmaschinen, wie beispielsweise Otto- oder Dieselmotoren in der Automobiltechnik eingesetzt.

Katalysator-Trägerkörper im Automobilbau werden üblicherweise mit einer Trägerschicht (insbesondere Wash-Coat) versehen, welche sich durch eine sehr große Oberfläche auszeichnet und üblicherweise mit mindestens einem katalytisch aktiven Material (z.B. Platin, Rhodium oder dergleichen) imprägniert ist. Beim Kontakt des Abgases mit diesen katalytisch aktiven Materialien erfolgt eine Reduzierung der im Abgas enthaltenen Schadstoffe, wie beispielsweise Kohlenmonoxid, ungesättigte Kohlenwasserstoffe, Stickstoffmonoxid usw. Um bereits eine relativ große Oberfläche für die Trägerschicht bereitzustellen, werden die Katalysator-Trägerkörper üblicherweise als Wabenkörper ausgeführt, die eine Vielzahl für ein Fluid (insbesondere Abgas) durchströmbare Kanäle aufweisen. Hierbei sind keramische, extrudierte und metallische Wabenkörper bekannt. Die Wabenkörper werden im allgemeinen in ein Gehäuse eingebracht, welches wiederum direkt in die Abgasleitung beispielsweise eines Pkw's integriert wird. In einer solchen mobilen Abgasanlage ist der Katalysator-Trägerkörper hohen thermischen und dynamischen Belastungen ausgesetzt.

Die thermischen Belastungen resultieren beispielsweise einerseits aus der Temperatur des Abgases selbst, wobei diese zunimmt, wenn der Katalysator-Trägerkörper näher an der Verbrennungskraftmaschine angeordnet ist. Andererseits führt auch die chemische, katalytische Umsetzung zu einer Temperaturerhöhung des Katalysator-Trägerkörpers, da diese im allgemeinen exotherm abläuft, so dass unter Umständen Temperaturen erreicht werden, die deutlich höher als die Abgastemperatur selbst ist (bis 1300°C). Die wesentlichen Faktoren im Hinblick auf die dynamischen Belastungen resultieren aus dein Verbrennungsprozess sowie externen Schwingungsanregungen. Da der Verbrennungsprozess in der Verbrennungslcraftmaschine intermittierend erfolgt, setzen sich die daraus resultierenden Druckstöße periodisch durch das Abgassystem fort. Externe Schwingungsanregung erfolgt beispielsweise aufgrund von Fahrbahn-Unebenheiten, über welche sich das Automobil bewegt.

Aufgrund dieser hohen thermischen und dynamischen Belastungen ist eine dauerhafte Verbindung des Wabenkörpers mit dem Gehäuse von besonderem Interesse. Die Verbindung muss einerseits geeignet sein, unterschiedliches thermisches Ausdehnungsverhalten des Wabenkörpers gegenüber dem Gehäuse zu kompensieren (gerade im Hinblick auf die Zeit nach einem Neu- oder Wiederstart der Verbrennungskraftmaschine), andererseits muss ein Ablösen des Wabenkörpers vom Gehäuse langfristig vermieden werden.

In diesem Zusammenhang sei zunächst auf das Verfahren zur Herstellung eines Wabenkörpers hingewiesen, wie es aus der WO 99/37896 hervorgeht. Dort wird ausgeführt, dass der Wabenkörper und das Mantelrohr aufgrund ihrer unterschiedlichen Werkstoffeigenschaften und aufgrund unterschiedlicher Temperaturen im Betrieb ein differierendes thermisches Dehnungsverhalten aufweisen. Es wird daher angestrebt, eine starre Verbindung zwischen dem Wabenkörper und dem Mantelrohr an wenigstens einem Endbereich des Wabenkörpers oder jedenfalls in bestimmten Teilbereichen zu vermeiden. Aus diesem Grund ist der in der WO 99/37896 beschriebene ummantelte Wabenkörper mit einer Manschette ausgeführt, welche trotz fertigungstechnischer Toleranzen des Mantelrohres sowie des Wabenkörpers sicherstellen soll, dass direkte Lötverbindungen zwischen Wabenkörper und Mantelrohr in dem wenigstens einen Endbereich des Wabenkörpers vermieden werden. Weitere Ausgestaltungen solcher Manschetten gehen beispielsweise auch aus der WO 01/79670 und WO 01/53668 hervor.

Gerade im Hinblick auf die Verwendung metallischer Wabenkörper und einer dauerhaften Anbindung in ein metallisches Gehäuse ist es weiter bekannt, die Verbindung des Wabenkörpers mit dem Gehäuse über eine Zwischenlage auszuführen, die auf ihrer Innenseite mit dem Wabenkörper und auf ihrer Außenseite mit dem Gehäuse verbunden ist. Eine solche Zwischenlage geht beispielsweise aus der japanischen Veröffentlichung JP 04-222636 A hervor. Die Zwischenlage ist dort als Wellblech ausgeführt und einerseits mit dem Wabenkörper sowie andererseits mit dem Gehäuse verbunden. Dabei wird ausgeführt, dass sich dieses Wellblech bei einer radialen Expansion des Wabenkörpers deformieren kann. Zur Gewährleistung einer solchen Deformation wird dort vorgeschlagen, dass eine Verbindung des Wellblechs hin zum Wabenkörper nicht in demselben Querschnitt angeordnet ist, wie eine Verbindung hin zum Gehäuse. Unter diesen Umständen sei auch eine Expansion bzw. Kontraktion des Wabenkörpers in axialer Richtung gewährleistet

Weiter sind sogenannte Kontraktionsbegrenzer aus der DE 101 37 897 bekannt. Der mindestens eine Kontraktionsbegrenzer, der zwischen dem Wabenkörper und dem Gehäuse angeordnet ist, bewirkt eine auswärts gerichtete Zugspannung auf zumindest einen Teil des Wabenkörpers, so dass der mittlere Ausgangsdurchmesser der Matrix während und/oder nach einer thermischen Beanspruchung um höchstens 5% abnimmt, vorzugsweise sogar nur um höchstens 2%. In diesem Zusammenhang wird erläutert, dass bekannte metallische Wabenkörper aufgrund des unterschiedlichen Abkühlverhaltens in Randbereichen bzw. in Kernbereichen nach wiederholter thermischer Wechselbeanspruchung nicht mehr ihre ursprüngliche, insbesondere zylindrische, Gestalt annehmen, sondern ihr Volumen reduzieren und eine beispielsweise tonnenähnliche Kontur aufweisen. Das hat insbesondere zur Folge, dass ein relativ großer Ringspalt zwischen der Matrix und dem Gehäuse gebildet wird, durch den insbesondere während des Betriebes des Wabenkörpers in der Abgasanlage einer Verbrennungskraftmaschine das ungereinigte Abgas hindurchströmt und folglich eine effektive Reinigung gemäß den gesetzlichen Vorschriften nicht gewährleistet werden kann. Zur Kompensierung bzw. Verhinderung einer solchen tonnenähnlichen Kontur des Wabenkörpers dienen die oben genannten Kontraktionsbegrenzer.

Bei all diesen Ausgestaltungen eines Katalysator-Trägerkörpers ist es von besonderer Bedeutung, die hierfür erforderlichen Verbindungsbereiche zwischen Wabenkörper und Gehäuse bzw. zwischen Wabenkörper und Manschette sowie Manschette und Gehäuse exakt zu definieren. Insbesondere muss bei der Herstellung darauf geachtet werden, dass beispielsweise beim Verlöten der benachbart zueinander angeordneten Komponenten ein Lotmittelfluss in Abschnitte außerhalb der gewünschten Verbindungsbereiche verhindert wird. Hierzu sind beispielsweise Mittel bekannt, die eine Verbindung von Metalloberflächen während einer Hochtemperaturbearbeitung (wie beispielsweise dem Sintern oder dem Löten) verhindern. Diese beinhalten zumeist feine keramische Teilchen, die mittels eines Binders an der entsprechenden Oberfläche aufgetragen werden. Der Binder ist schon bei relativ niedrigen Temperaturen flüchtig. Diese Substanz ist unter anderem auch als so genanntes Lotstop bekannt.

Insbesondere sei an dieser Stelle auf die WO 01/79669 verwiesen. Dort wird ein Herstellungsverfahren für einen Katalysator-Trägerkörper beschrieben, wobei das Gehäuse in mindestens einem Abschnitt der Innenwandung mit einer Passivierungsschicht zur gezielten Verhinderung einer Lötverbindung mit dem Wabenkörper ausgeführt ist. Die Passivierungsschicht ist dabei als Oberflächen-Oxidschicht, insbesondere als keramische Auftrags-Schicht ausgebildet. Zur Herstellung einer solchen Passivierungsschicht wird vorgeschlagen, das Gehäuse selektiv, räumlich begrenzt zu erhitzen, induktiv zu erwärmen, chemisch zu behandeln sowie die keramische Schicht mittels Flammspritzen auf das Gehäuse aufzutragen. Die dort offenbarten Alternativen zur Herstellung einer solchen Passivierungsschicht haben sich in der Vergangenheit sehr gut bewährt, allerdings ist es hierbei überwiegend erforderlich, das Gehäuse einer zusätzlichen thermischen Behandlung zu unterwerfen. Dies ist beispielsweise im Hinblick auf die Herstellungskosten ungünstig, da eine Vielzahl unterschiedlicher Bearbeitungsstationen durchlaufen werden müssen, wobei unter Umständen wiederum Stillstandzeiten erforderlich sind, in denen das Bauteil aufgewärmt bzw. abgekühlt wird.

Hiervon ausgehend ist es Aufgabe der vorliegenden Erfindung, einen Katalysator-Trägerkörper anzugeben, der durch ein einfaches, kostengünstiges und Materialschonendes Verfahren hergestellt werden kann, wobei exakt abgegrenzte Verbindungsbereiche der miteinander zu verbindenden Komponenten des Katalysator-Trägerkörpers sichergestellt sind. Weiterhin sollen Herstellungsverfahren aufgezeigt werden, die ohne großen technischen Aufwand die Bereitstellung von Passivierungsschichten in den gewünschten Bereichen ermöglichen, wobei dies auch unter möglichst geringem Einsatz von passivierenden Materialen erzielt werden soll.

Gelöst werden diese Aufgaben durch einen Katalysator-Trägerkörper mit den Merkmalen des Patentanspruchs 1, sowie durch Verfahren zur Herstellung von Katalysator-Trägerkörpern mit den Merkmalen des Patentanspruchs 3, 4 oder 5. Vorteilhafte Weiterbildungen sind in den jeweils abhängigen Ansprüchen beschrieben. Dabei ist festzuhalten, dass die Merkmale der jeweiligen Ansprüche beliebig miteinander kombinierbar sind.

Der erfindungsgemäße Katalysator-Trägerkörper umfasst zumindest ein Gehäuse mit einer Innenseite und einen Wabenkörper, wobei der Wabenkörper mit der Innenseite in einem Anbindungsbereich fügetechnisch verbunden ist und der Anbindungsbereich von zumindest einer Passivierungsschicht begrenzt ist. Er zeichnet sich dadurch aus, dass die Passivierungsschicht eine Vielzahl von alleinstehenden Kristallagglomerationen mit einer gemittelten Höhe umfasst, welche im Bereich von 0,3 bis 1,5 µm liegen. Demnach wird hier vorgeschlagen, dass der Bereich, in dem eine Anbindung von Gehäuse und Wabenkörper verhindert werden soll, nicht vollständig von einer einheitlichen, flächigen Passivierungsschicht bedeckt, sondern eher eine offenporige, raue, zerklüftete Passivierungsschicht gebildet ist. Dies hat mehrere Vorteile: So ist beispielsweise nur noch ein geringer Materialeinsatz des Passivierungsmittels (wie z.B. Al₂O₃) erforderlich. Weiterhin werden gezielt Konzentrationsunterschiede auf der Oberfläche erzeugt, die z.B. eine Diffusion und Oxidation von im Metall des Gehäuses und/oder des Wabenkörpers enthaltenen Aluminiums begünstigen. Dabei ist es besonders vorteilhaft, wenn eine Vielzahl von Kristallagglomerationen voneinander abgegrenzt und beabstandet sind, insbesondere soweit, dass der Abstand zur benachbarten Kristallagglomeration größer als dessen Höhe ist.

Weiterhin wird vorgeschlagen, dass die Kristallagglomerationen auf der Innenseite des Gehäuses oder auf mindestens einer Manschette, die zwischen dem Gehäuse und dem Wabenkörper positioniert ist, angeordnet sind; wobei die Innenseite des Gehäuses bzw. die Manschette im Bereich der Passivierungsschicht bevorzugt aufgeraut ist. Auf diese Weise kann auch im Hinblick auf eine Serienfertigung eine so zerklüftete Oberfläche des Passivierungsmittels prozesssicher erzielt werden.

Gemäß einem weiteren Aspekt der Erfindung wird ein Verfahren zur Herstellung eines Katalysator-Trägerköipers, insbesondere wie oben beschrieben, vorgeschlagen, welches wenigstens folgende Schritte aufweist:
- Aufrauen eines Bereichs der Innenseite des Gehäuses und/oder des Wabenkörpers unter Verwendung des Fertigungsverfahrens Strahlspanen,
wobei als Strahlmedium Korund-Teilchen eingesetzt werden;
- Einfügen des Wabenkörpers in das Gehäuse;
- Ausbilden von fügetechnischen Verbindungen.

Im Hinblick auf eine andere Ausgestaltung des Katalysator-Trägerkörpers umfassend zumindest ein Gehäuse mit einer Innenseite, mindestens eine Manschette und einen Wabenkörper, wobei die mindestens eine Manschette zwischen dem Gehäuse und dem Wabenkörper angeordnet wird, wird folgendes Verfahren zur Herstellung vorgeschlagen:
- Aufrauen eines Bereichs der Manschette unter Verwendung des Fertigungsverfahrens Strahlspanen, wobei als Strahlmedium Korund-Teilchen eingesetzt werden;
- Einbringen der mindestens einen Manschette in das Gehäuse oder Anordnen der mindestens einen Manschette um den Wabenkörper;
- Einfügen des Wabenkörpers in das Gehäuse;
- Ausbilden von fügetechnischen Verbindungen.

Das Fertigungsverfahren des Strahlspanens hat sich in Versuchen aufgrund der flexiblen Einsatzmöglichkeiten besonders ausgezeichnet. Beim Strahlspanen werden Schneidkörner lose auf die Bearbeitungsstelle geschleudert. Da über die Wirkung der Schneide hauptsächlich die kinetische Energie des Korns entscheidet, ist das Wirkprinzip des Schneideneingriffs energiegebunden. Hier wird die Verwendung von Korund-Teilchen, insbesondere mit einer Größe von 10µm bis 20 µm, bevorzugt, welche mit einem Energieträger im Druck- oder Schleuderverfahren auf die zu behandelnde Oberfläche gestrahlt werden. Der Einsatz von Korund-Teilchen hat den Vorteil, dass sich zumindest Bruchstücke der Teilchen selbst an der Oberfläche des bestrahlten Bauteils anlagern bzw. auf der Oberfläche eine Diffusion und Oxidation von im Metall enthaltenem Aluminium begünstigen, so dass in der Regel kein weiterer Vorgang benötigt wird, ein (anderes/weiteres) passivierend wirkendes Material in diesem Bereich aufzutragen. Mit einer entsprechenden Strahldüse sind in der Regel alle hier relevanten Bereiche des Gehäuses, des Wabenkörpers und/oder der Manschette auch vollautomatisch leicht zu erreichen. Aus diesem Grund eignet sich dieses Verfahren sehr gut für die Serienproduktion, die beispielsweise im Automobilbau bei der Herstellung von Katalysator-Trägerkörpern üblich ist.

Gemäß einem weiteren Aspekt der Erfindung wird ein Herstellungsverfahren vorgeschlagen, welches wenigstens folgende Schritte umfasst:
- Vermengen und/oder Mischen eines Klebemittels mit einer passivierenden Substanz;
- Anbringen des Klebemittels mit der passivierenden Substanz an der Innenseite des Gehäuses;
- Einfügen des Wabenkörpers in das Gehäuse; und
- Ausbilden von fügetechnischen Verbindungen.

Ein wesentlicher Aspekt besteht dabei in der Verwendung eines Klebemittels, welches gleichzeitig eine passivierende Substanz aufweist. Derartiges Klebemittel wird auf der Innenseite des Gehäuses aufgebracht, um den Wabenkörper im Inneren des Gehäuses zu fixieren, so dass nachfolgend die Stoffe in die Wabenstruktur bzw. zwischen das Gehäuse und die Wabenstruktur eingebracht werden können, die zur Ausbildung der gewünschten fügetechnischen Verbindungen dienen. Somit unterscheidet sich das Klebemittel insbesondere gegenüber den bekannten Bindemitteln dadurch, dass das Klebemittel primär die Funktion hat, die Wabenstruktur zumindest zeitweise in dem Gehäuse zu fixieren, also nicht nur eine Haftwirkung zwischen der passivierenden Schicht und der Oberfläche bereitzustellen.

Die Notwendigkeit der vorherigen Fixierung ergibt sich insbesondere im Hinblick auf Wabenkörper, welche eine Mehrzahl von zumindest teilweise strukturierten Metallfolien aufweist. Üblicherweise werden diese Metallfolien spiralförmig, S-förinig, U-förmig oder in ähnlicher Weise gewickelt, gewunden und/oder gestapelt. Dieser "lose" Stapel von Metallfolien wird anschließend mit einer entsprechenden Vorrichtung in das Gehäuse eingeführt, wobei es von besonderer Bedeutung ist, dass die untereinander erzeugte Anordnung der Metallfolien im wesentlichen erhalten bleibt. Diese Beibehaltung der Anordnung der Metallfolien zueinander ist gerade auch im Hinblick auf die nachfolgenden Fertigungsprozesse wichtig, da hier beispielsweise die Zufuhr von Haftmittel und/oder Lotmittel "berührend" durchgeführt wird. D.h., dass die zuvor genannten Stoffe in der Regel nicht aufgesprüht, sondern zumindest teilweise durch Kontakt einer Auftragsvorrichtung mit den Metallfolien aufgetragen bzw. eingeführt werden. Da in diesem Zusammenhang nicht sichergestellt werden kann, dass eine gleichmäßige Kontaktierung aller Metallfolien gleichzeitig stattfindet, ist der Verbund bzw. Stapel von Metallfolien durch die Verwendung des hier vorgeschlagenen Klebemittels vor einem gegenseitigen Verschieben der Metallfolien bewahrt.

Neben der Funktion der Fixierung des Wabenkörpers in frühen Phasen des Herstellungsprozesses, ermöglicht das Klebemittel zudem die Generierung einer Passivierungsschicht. Dazu ist erforderlich, dass die Klebwirkung des Klebemittels in einer späteren Phase des Herstellungsprozesses in den Hintergrund tritt, vorzugsweise sogar vollständig verschwindet. Zumindest muss aber sichergestellt werden, dass die Klebwirkung des Klebemittels bei dem fertigen Katalysator-Trägerkörper signifikant schwächer als die Verbindungskräfte der fügetechnischen Verbindungen ausgeführt sind, so dass die daraus resultierenden Klebverbindungen keine Spannungen zwischen Wabenkörper und Gehäuse bei einer Relativbewegung dieser Komponenten zur Folge hat.

Nachdem nun das Klebemittel seine Klebwirkung im wesentlichen verloren hat, wird eine Passivierungsschicht an der entsprechenden Stelle der Innenseite des Gehäuses ausgebildet, welche verhindert, dass beispielsweise nachträglich aufgebrachtes und erhitztes Lotmittel sich in diesem Bereich anlagert. In diesem Zusammenhang ist es besonders vorteilhaft, das Klebemittel mit der passivierenden Substanz in einem Abschnitt vorzusehen, welcher den Bereich, in dem anschließend die fügetechnischen Verbindungen ausgeführt werden sollen, zumindest teilweise begrenzt. Demnach erfolgt die erstmalige, vorläufige Fixierung des Wabenkörpers im Inneren des Gehäuses zunächst in einem anderen Abschnitt, als letztendlich die fügetechnischen Verbindungen angeordnet sind. Das hier vorgeschlagene Verfahren ist besonders einfach und kostengünstig auch im Rahmen einer Serienfertigung durchführbar. Insbesondere werden lange Wege des Halbzeuges vermieden, da beispielsweise Transporte hin zu Öfen und/oder Lagerstätten vermieden wird. Weiterhin erlaubt die Verbindung des vorgeschlagenen Klebemittels mit einer passivierenden Substanz die Ausbildung von Passivierungsschichten, die anschließend sicherstellen, dass die fügetechnischen Verbindungen tatsächlich nur in dem Bereich vorliegen, der im Hinblick auf die thermischen und dynamischen Belastungen des Katalysator-Trägerkörpers gestaltet wurden.

Gemäß einer Weiterbildung des Verfahrens ist die passivierende Substanz pulverförmig, wobei es sich bevorzugt um Aluminiumoxid handelt, insbesondere mit einem mittleren Korndurchmesser von 0,3 bis 1,5 µm. Aluminiumoxid hat sich bereits in der Vergangenheit als "Lotstop" bewährt. Der hier vorgeschlagene mittlere Korndurchmesser hat sich in vorherigen Tests als besonders geeignet erwiesen, da sich hier eine nahezu geschlossene Schicht bei einem nachträglichen Verdampfen des Klebemittels gebildet hat. Somit weist die hergestellte Passivierungsschicht keine "freien Zonen" auf, in denen beispielsweise das Metall des Gehäuses freiliegt und somit als mögliche Stelle zur Ausbildung von fügetechnischen Verbindungen bereitsteht. Alternativ oder in Kombination hierzu ist unter Umständen auch die Verwendung von anderer feuerfester Metalloxide sinnvoll, wie z.B. Zirkoniumoxid, Magnesiumoxid oder dergleichen.

In diesem Zusammenhang sei auch erwähnt, dass der Volumenanteil der passivierenden Substanz in dem Klebemittel mindestens 40%, insbesondere mindestens 60%, bevorzugt mindestens 75% beträgt. Ein höherer Volumenanteil der passivierenden Substanz ist insbesondere dann zu wählen, wenn der Abschnitt auf der Innenseite des Gehäuses relativ groß ausgeführt ist, an dem das Klebemittel angeordnet wird, und/oder der Wabenkörper relativ kleinvolumig ausgeführt ist. Kleinvolumig bedeutet in diesem Zusammenhang, dass der Wabenkörper ein Volumen hat (Wabenstruktur inklusive Kanäle), welches beispielsweise kleiner als 1 l (Liter), insbesondere 0,7 l, bevorzugt kleiner 0,5 l sowie ganz besonders bevorzugt kleiner 0,3 l beträgt. Ergänzend sei auch noch erläutert, dass mit "mittlerer" Korndurchmesser ein Mittelwert gemeint ist, der die üblicherweise verwendete Kornfraktion (mit etwa einer Gauß-Verteilung der Korndurchmesser) charakteristisch beschreibt.

Gemäß einer Weiterbildung wird vorgeschlagen, zwischen dem Gehäuse und dem Wabenkörper mindestens eine Manschette anzuordnen, welche bevorzugt zunächst um den Wabenkörper gelegt wird und mit diesem gemeinsam anschließend wenigstens teilweise in das Gehäuse eingeführt wird. Bei dieser Ausgestaltung des Katalysator-Trägerkörpers umfasst dieser zumindest drei separate Bauteile, die in einer bestimmten Position zueinander angeordnet werden müssen, bevor sie mit Haftmittel bzw. Lotmittel versehen werden können, die letztendlich die fügetechnischen Verbindungen der Komponenten zueinander realisieren. Zur Ausbildung von fügetechnischen Verbindungen zwischen dem Gehäuse und der Manschette und/oder der Manschette und dem Wabenkörper werden häufig bandförmige Lotstreifen eingesetzt, die vor dem Einfügen der Manschette in das Gehäuse bereits auf der Manschette fixiert sind. In Anbetracht der einleitend genannten Probleme bei der Abstimmung der fügetechnischen Verbindungen auf die thermischen und dynamischen Belastungen des Katalysator-Trägerkörpers ist es von besonderer Wichtigkeit, dass diese Manschette die gewünschte Relativlage zum Gehäuse bzw. zum Wabenkörper bis zu dem Zeitpunkt beibehält, wenn die fügetechnischen Verbindungen tatsächlich ausgebildet werden. Zu diesem Zweck wird an der Innenseite des Gehäuses und/oder der äußeren oder inneren Mantelfläche der Manschette das Klebemittel mit einer passivierenden Substanz aufgetragen, so dass ein unerwünschtes Verschieben der Komponenten relativ zueinander ausgeschlossen ist. Betreffend die Anordnung des Klebemittels auf der Manschette ist im allgemeinen in ähnlicher Weise zu verfahren, wie dies bereits weiter oben mit Bezug auf die Innenseite des Gehäuses sowie die relative Lage zu den fügetechnischen Verbindungen erläutert wurde. Zur Ausgestaltung einer solchen Manschette sei auf die bereits oben genannten Veröffentlichungen WO 01/79670 und WO 01/53668 Bezug genommen.

Gemäß noch einer weiteren Ausgestaltung des Verfahrens wird vorgeschlagen, das Klebemittel streifenförmig, insbesondere vollständig umlaufend und vorzugsweise mit einer Breite von kleiner 10 mm, auf der Innenseite des Gehäuses aufzutragen. Bei einer streifenförmigen Ausgestaltung kann das Klebemittel in einem oder mehreren Abschnitten auf der Innenseite des Gehäuses angeordnet werden, welche sich beispielsweise im wesentlichen in axialer Richtung erstrecken. Alternativ und/oder kumulativ hierzu können diese Abschnitte aber auch in Umfangsrichtung umlaufend, insbesondere vollständig umlaufend ausgebildet sein, so dass praktisch eine ringförmige Barriere gebildet wird. Im Hinblick auf die axiale Erstreckung des Abschnittes, in dem das Klebemittel angeordnet wird bzw. sich später die Passivierungsschicht ausbildet, wird ein Bereich von 5 mm bis 50 mm bevorzugt. Die daraus resultierende Passivierungsschicht hat beispielsweise eine Dicke von 80 µm bis 120 µm

Zur Ausbildung von fügetechnischen Verbindungen wird weiter vorgeschlagen, dass das Einfügen des Wabenkörpers in das Gehäuse zunächst nur teilweise erfolgt und dann über wenigstens eine Stirnseite des Katalysator-Trägerkörpers Haftmittel und/oder pulverförmiges Lot eingebracht wird. Bezüglich der detaillierten Beschreibung einer solchen Zufuhrung von Haftmittel und/oder pulverförmigem Lot wird auf die (unveröffentlichte) DE 101 51 487 verwiesen. Dabei sei noch erläutert, dass das Haftmittel primär nur die Funktion hat, sich an den zu verbindenden Komponenten anzulagern und das nachträglich zugeführte Lot zumindest zeitweise zu fixieren. Eine erhebliche Haftwirkung, zur Fixierung der Komponenten selbst ist vordergründig nicht gegeben, so dass hier ein deutlicher Unterschied zu den Eigenschaften des Klebemittels zu sehen ist.

Gemäß noch einer weiteren Ausgestaltung des Verfahrens werden die fügetechnischen Verbindungen während einer thermischen Behandlung gebildet, wobei vorzugsweise das Klebemittel und das Haftmittel überwiegend verdampft und insbesondere eine Passivierungsschicht mit der passivierenden Substanz hergestellt wird. Bei der thermischen Behandlung wird ein Hochtemperatur-Vakuum-Prozess bevorzugt, wobei das Klebemittel und/oder das Haftmittel bei Temperaturen kleiner 200°C verdampft sind. Das Lot beginnt dabei erst bei höheren Temperaturen mit der Verflüssigung (ab ca. 450°C), so dass vor diesem Flüssigwerden des Lots bereits die Passivierungsschicht gebildet ist, und ein Fließen von Lotmittel über die Passivierungsschicht hinweg bzw. ein Anlagern von Lotmittel im Bereich der Passivierungsschicht verhindert ist.

Weitere vorteilhafte Ausgestaltungen des erfindungsgemäßen Verfahrens sowie spezielle Ausgestaltungen eines Katalysator-Trägerkörpers werden anhand der Zeichnungen näher erläutert. Dabei sei darauf hingewiesen, dass die dort gezeigten Ausgestaltungen besonders bevorzugte Ausführungsbeispiele darstellen, die Erfindung jedoch nicht auf diese begrenzt ist.

Es zeigen:
- Figur 1:: schematisch den Ablauf eines Herstellungsverfahrens,
- Figur 2:: schematisch den Aufbau eines Katalysator-Trägerkörpers in Explosionsdarstellung,
- Figur 3:: eine Detailzeichnung einer weiteren Ausgestaltung eines Katalysator-Trägerkörpers,
- Figur 4:: eine schematische und perspektivische Darstellung einer weiteren Ausgestaltung eines Katalysator-Trägerkörpers, und
- Figur 5:: eine Detailansicht einer Ausgestaltung eines Katalysator-Trägerkörpers mit fügetechnischen Verbindungen, und
- Figur 6:: eine schematische Darstellung des Spanstrahl-Vorgangs zur Erzeugung der Passivierungsschicht, und
- Figur 7:: eine Detailansicht der Passivierungsschicht.

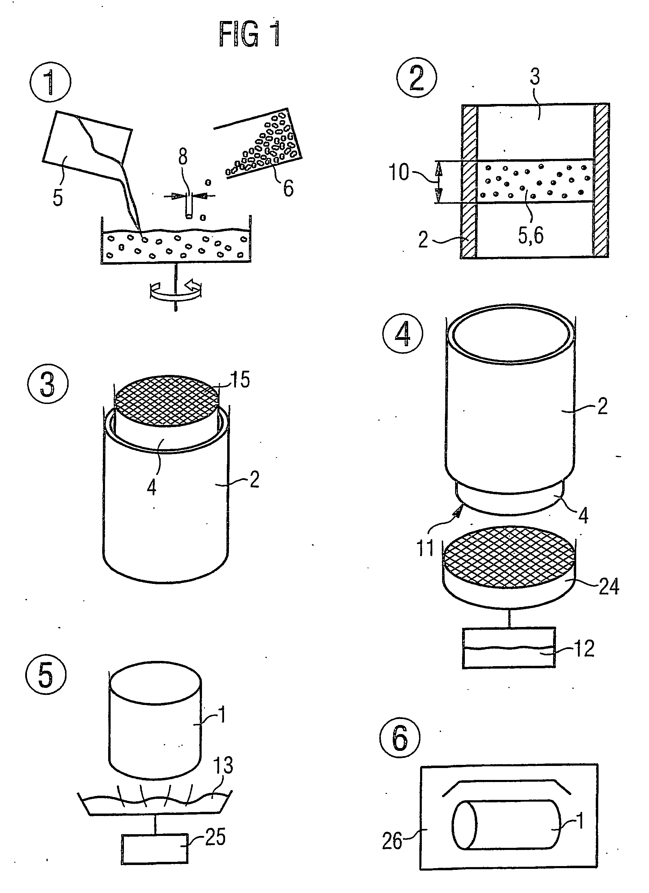

Figur 1 zeigt schematisch den Ablauf einer Ausgestaltung des erfindungsgemäßen Verfahrens zur Herstellung eines Katalysator-Trägerkörpers 1. Schritt 1 veranschaulicht dabei das Vermengen und/oder Mischen eines Klebemittels 5 mit einer passivierenden Substanz 6. Die passivierende Substanz 6 ist pulverförmig, wobei es sich insbesondere um Aluminiumoxid (bevorzugt plattenförmige Teilchen) mit einem mittleren Korndurchmesser 8 von 0,3 µm bis 1,5 µm handelt Die beiden Stoffe werden beispielsweise unter Einsatz eines Rührwerkes oder dergleichen gleichmäßig untereinander verteilt.

Im Schritt 2 wird ein Gehäuse 2 auf seiner Innenseite 3 mit einem Gemisch aus dem Klebemittel 5 und der passivierenden Substanz 6 versehen. Das dargestellte Gehäuse 2 ist dabei im Schnitt dargestellt.

Schritt 3 zeigt, wie der Wabenkörper 4 zumindest teilweise in ein Gehäuse 2 eingefugt wird. Bei dem Wabenkörper 4 handelt es sich bevorzugt um einen metallischen Wabenkörper 4, wobei auch das Gehäuse 2 bevorzugt aus Metall ist.

Schritt 4 zeigt eine Möglichkeit, wie in innere Bereiche des Wabenkörpers 4 bzw. des Gehäuses 2 Haftmittel 12 eingebracht werden kann. Das Haftmittel 12 wird dabei beispielsweise unter Verwendung eines Kapillarstempels bzw. eines Verteilers 24 in den Wabenkörper 4 eingebracht, indem der Verteiler 24 stirnseitig den Wabenkörper 4 kontaktiert. Der Verteiler 24 weist eine Vielzahl von Durchlässen auf, in denen sich Haftmittel 12 angeordnet hat, wobei beim Kontakt mit dem Wabenkörper 4 das Haftmittel 12 in Folge eines Kapillar-Effektes in Kanäle 15 aufsteigt und somit die später mit Lot zu versehenden Bereiche benetzt.

Schritt 5 zeigt ein Wirbelbett 25, mit dem pulverförmiges Lot 13 in innere Bereiche des Katalysator-Trägerkörpers 1 hineingeblasen wird. Das Lot 13 bleibt dabei an dem Haftmittel 12 (nicht dargestellt) kleben.

Schritt 6 zeigt schematisch einen Katalysator-Trägerkörper 6 in einem Ofen 26. Dabei wird eine thermische Behandlung des Katalysator-Trägerkörpers durchgeführt, bei dem zunächst das eingebrachte Klebemittel 5 verdampft und eine Passivierungsschicht ausgebildet wird, bevor das Lot 13 sich verflüssigt. Nach der thermischen Behandlung bzw. beim Abkühlen des Katalysator-Trägerkörpers verfestigt sich das zuvor flüssige Lot, wobei die einzelnen Komponenten des Katalysator-Trägerkörpers miteinander verbunden werden. Dieser letzte Verfahrensschritt umfasst bevorzugt das Hochtemperatur-Vakuum-Löten.

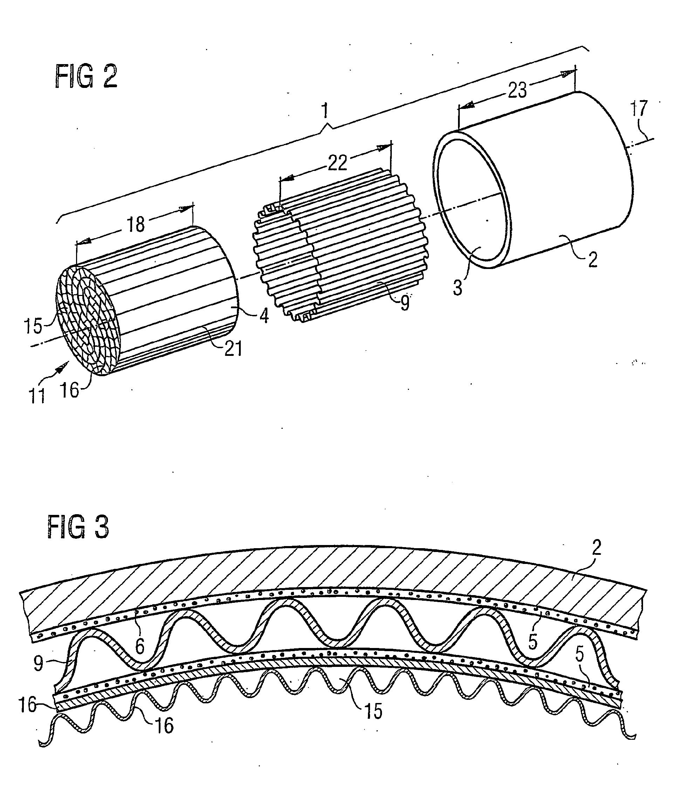

Figur 2 zeigt schematisch und in einer Explosionsdarstellung eine Ausgestaltung eines Katalysator-Trägerkörpers 1 mit einer Manschette 9. Die erste Komponente des Katalysator-Trägerkörpers stellt der Wabenkörper 4 dar. Dieser umfasst eine Vielzahl metallischer Blechlagen 16, die zum Teil glatt und zum Teil strukturiert ausgeführt, abwechselnd geschichtet und nachfolgend miteinander gewunden oder verschlungen wurden. Die Blechlagen 16 weisen dabei eine Dicke bevorzugt kleiner 50 µm, insbesondere kleiner 20 µm und bevorzugt kleiner 15 µm auf. Betreffend die Herstellung bzw. Anordnung der Blechlagen für einen solchen Wabenkörper 4 sei an dieser Stelle auf die EP 0 245 737, die WO 90/03220 sowie die DE 3743723 verwiese. Bei der dargestellten Ausführungsform sind die Blechlagen 16 in etwa S-förmig gewunden, wobei die Enden 21 der Blechlagen 16 am Umfang erkennbar sind. Durch die Strukturierung einiger Blechlagen 16 werden Kanäle 15 gebildet, die sich im wesentlichen parallel zu einer Achse 17 des Katalysator-Trägerkörpers 1 erstrecken und von den Stirnseiten 11 des Wabenkörpers 4 begrenzt werden, also im wesentlichen der Länge 18 des Wabenkörpers 4 entsprechen.

Nach außen wird der Katalysator-Trägerkörper 1 von einem Gehäuse 2 begrenzt, welches eine Ausdehnung 23 in Richtung der Achse 17 aufweist. Zwischen dem Wabenkörper 4 und dem Gehäuse 2 ist eine Manschette 9 angeordnet, welche eine Erstreckung 22 in Richtung einer Achse 17 hat. Zur Herstellung eines solchen Katalysator-Trägerkörpers 1 wird zunächst der Wabenkörper 4 und die Manschette 9 separat hergestellt, wobei der Wabenkörper 4 anschließend in die Manschette eingeführt wird. Auf der Innenseite 3 des Gehäuses 2 wird das Klebemittel 5 mit einer passivierenden Substanz 6 (nicht dargestellt) vorgesehen, welches zunächst unmittelbar nach dem Einschieben der Manschette 9 mit dem Wabenkörper 4 eine Fixierung innerhalb des Gehäuses 2 sicherstellt. Anschließend erfolgt ein stirnseitiges Beloten des Katalysator-Trägerkörpers 1 und eine abschließende thermische Behandlung, bei dem fügetechnische Verbindungen generiert werden, die nicht im Bereich des zuvor angebrachten Klebemittels 5 (nicht dargestellt) positioniert sind. Grundsätzlich ist die Ausgestaltung des Katalysator-Trägerkörpers 1 im Hinblick auf die Länge 18 des Wabenkörpers 4, der Erstreckung 22 der Manschette 9 und/oder der Ausdehnung 23 des Gehäuses 2 frei wählbar, so dass nicht alle Komponenten bündig an den Stirnseiten 11 abschließen müssen.

Figur 3 zeigt eine Detailansicht eines Katalysator-Trägerkörpers 1 im Schnitt. Dabei sind teilweise ein Gehäuse 2 sowie ein aus Blechlagen 16 gebildeter Wabenkörper 4 (nicht gekennzeichnet) mit Kanälen 15 dargestellt, zwischen denen eine Manschette 9 angeordnet ist. Der dargestellte Schnitt liegt in einem Bereich des Katalysator-Trägerkörpers 1, in dem keine Verbindungen zwischen der Manschette 9 und dem Gehäuse 2 bzw. dem Wabenkörper 4 gewünscht sind. Deshalb ist in diesem Bereich zwischen der Manschette 9 und dem Gehäuse 2 bzw. zwischen der Manschette und den Blechlagen 16 jeweils Klebemittel 5 mit einer passivierenden Substanz vorgesehen. Die hier gezeigte Ausgestaltung stellt praktisch ein Halbzeug dar, wobei nach der thermischen Behandlung des Katalysator-Trägerkörpers 1 eine durchgehende Passivierungsschicht 14 aus der passivierenden Substanz 6 zwischen der Manschette 9 und den angrenzenden Komponenten gebildet ist.

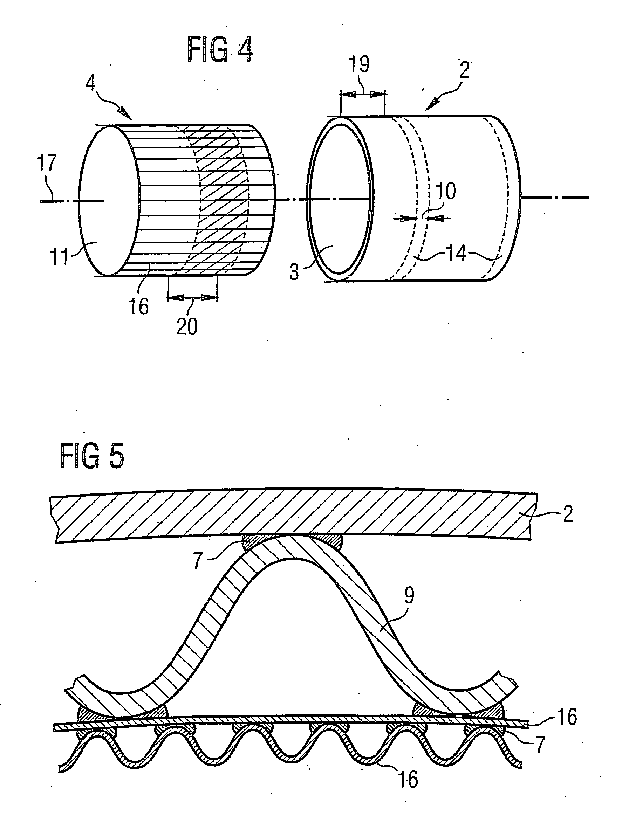

Figur 4 zeigt perspektivisch eine weitere Ausgestaltung eines Katalysator-Trägerkörpers 1, umfassend einen Wabenkörper 4 und ein Gehäuse 2. Der Wabenkörper 4 ist wiederum mit einer Mehrzahl von Blechlagen 16 aufgebaut. Schraffiert ist dabei der Anbindungsbereich 20 des Wabenkörpers 4 an dem Gehäuse 2 dargestellt. Der Anbindungsbereich 20 ist der Bereich, in dem anschließend eine fügetechnische Verbindung des Wabenkörpers 4 bzw. der Blechlagen 16 mit dem Gehäuse 2 bewirkt wird. Auf der Innenseite 3 des Gehäuses 2 wurde zudem Klebemittel 5 mit einer passivierenden Substanz 6 vorgesehen, so dass bei der nachfolgenden thermischen Behandlung streifenförmig vollständig umlaufende Passivierungsschichten 14 mit einer Breite 10. kleiner 10 mm generiert werden. Wie ersichtlich, sind die Passivierungsschichten 14 so angeordnet, dass diese nach dem vollständigen Einschieben des Wabenkörpers 4 in das Gehäuse 2 den Anbindungsbereich 20 begrenzen. Dabei wird verhindert, dass Hilfsstoffe zur Ausbildung von fügetechnischen Verbindungen über die Grenzen des Anbindungsbereiches 20 hinausfließen und dort unerwünschte Verbindungen hervorrufen. Während einer Passivierungsschicht 14 direkt an einer Stirnseite 11 des Wabenkörpers 4 angeordnet ist, ist die andere Passivierungsschicht 14 mit einem Abstand 19 ausgehend von der Stirnseite 11 in Richtung der Achse 17 entfernt angeordnet.

Figur 5 zeigt eine weitere Detailansicht einer Ausgestaltung eines Katalysator-Trägerkörpers mit einem Gehäuse, einer Manschette sowie einen Wabenkörper 4 bildende Blechlagen 7. Dabei soll insbesondere die Ausbildung der fügetechnischen Verbindungen 7 dargestellt werden, welche sich bevorzugt in den Kontaktbereichen der benachbart zueinander angeordneten Komponenten 2, 9, 16 ausbilden. Dabei erfolgt die Ausbildung derartiger Verbindungen 7 ausschließlich im Anbindungsbereich 20, da hier keine Passivierungsschicht 14 vorgesehen ist.

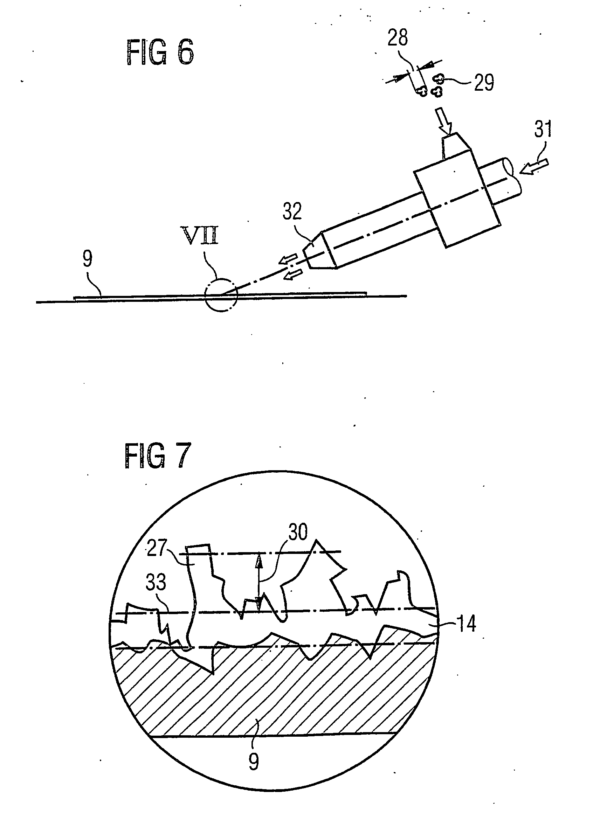

Figur 6 zeigt eine schematische Darstellung des Spanstrahl-Vorgangs zur Erzeugung der Passivierungsschicht. Korund-Teilchen 29 mit einer Größe 28 von 10 µm bis 20 µm werden mit einer Düse 32 auf eine Manschette 9 gestrahlt. Hierzu wird ein Energieträger 31 wie z.B. Luft oder eine Flüssigkeit verwendet, dem die Korund-Teilchen 29 zugeführt werden. Diese werden mitgerissen und treffen auf die Oberfläche der Manschette 9. Dabei wird einerseits die Oberfläche der Manschette 9 geritzt, abgetragen, etc. zum anderen erfolgt jedoch auch das Aufspalten der Korund-Teilchen und die Anlagerung von Teilfragmenten an der aufgerauten Oberfläche.

Diese Oberfläche der Manschette 9 mit der Passivierungsschicht 14 ist in der Figur 7 schematisch dargestellt. Die Passivierungsschicht 14 umfasst eine Vielzahl von alleinstehenden Kristallagglomerationen 27 mit einer gemittelten Höhe 30, welche im Bereich von 0,3 bis 1,5 µm liegen. Mit der "Höhe 30" ist der Überstand der Kristallagglomerationen 27 gegenüber dem Umgebungsniveau 33 der Passivierungsschicht 14 gemeint.

Das hier beschriebene Verfahren ist besonders einfach und kostengünstig, so dass es für den Einsatz in einer Serienfertigung prädestiniert ist. Die hieraus resultierenden Katalysator-Trägerkörper sind über einen langen Zeitraum in der Lage, den thermischen und dynamischen Belastungen im Abgassystem eines Automobils standzuhalten.

### Bezugszeichenliste

- 1: Katalysator-Trägerkörper
- 2: Gehäuse
- 3: Innenseite
- 4: Wabenkörper
- 5: Klebemittel
- 6: Substanz
- 7: Verbindung
- 8: Korndurchmesser
- 9: Manschette
- 10: Breite
- 11: Stirnseite
- 12: Haftmittel
- 13: Lot
- 14: Passivierungsschicht
- 15: Kanal
- 16: Blechlage
- 17: Achse
- 18: Länge
- 19: Abstand
- 20: Anbindungsbereich
- 21: Ende
- 22: Erstreckung
- 23: Ausdehnung
- 24: Verteiler
- 25: Wirbelbett
- 26: Ofen
- 27: Kristallagglomeration
- 28: Größe
- 29: Korund-Teilchen
- 30: Höhe
- 31: Energieträger
- 32: Düse
- 33: Umgebungsniveau

## Patentansprüche

1. Katalysator-Trägerkörper (1) umfassend zumindest ein Gehäuse (2) mit einer Innenseite (3) und einen Wabenkörper (4), wobei der Wabenkörper (4) mit der Innenseite (3) in einem Anbindungsbereich (20) fügetechnisch verbunden ist und der Anbindungsbereich (20) von zumindest einer Passivierungsschicht (14) zur Verhinderung einer Anbindung von Gehäuse und Wabenkörper begrenzt ist, **dadurch gekennzeichnet, dass** die Passivierungsschicht (14) eine Vielzahl von alleinstehenden Kristallagglomerationen (27) mit einer gemittelten Höhe (30) umfasst, welche im Bereich von 0,3 bis 1,5 µm liegen.

2. Katalysator-Trägerkörper (1) nach Anspruch 1, **dadurch gekennzeichnet, dass** die Kristallagglomerationen (27) auf der Innenseite (3) des Gehäuses (2) oder auf mindestens einer Manschette (9), die zwischen dem Gehäuse (2) und dem Wabenkörper (4) positioniert ist, angeordnet sind, wobei die Innenseite (3) des Gehäuses (2) bzw. die Manschette (9) im Bereich der Passivierungsschicht (14) bevorzugt aufgeraut ist.

3. Verfahren zur Herstellung eines Katalysator-Trägerkörpers (1), nach Anspruch 1 oder 2, umfassend zumindest ein Gehäuse (2) mit einer Innenseite (3) und einen Wabenkörper (4), welches wenigstens folgende Schritte aufweist:
- Aufrauen eines Bereichs der Innenseite des Gehäuses und/oder des Wabenkörpers unter Verwendung des Fertigungsverfahrens Strahlspanen,
wobei als Strahlmedium Korund-Teilchen (30) eingesetzt werden;
- Einfügen des Wabenkörpers (4) in das Gehäuse (2);
- Ausbilden von fügetechnischen Verbindungen (7).

4. Verfahren zur Herstellung eines Katalysator-Trägerkörpers (1), nach Anspruch 1 oder 2, umfassend zumindest ein Gehäuse (2) mit einer Innenseite (3), mindestens eine Manschette (9) und einen Wabenkörper (4), wobei die mindestens eine Manschette (9) zwischen dem Gehäuse (2) und dem Wabenkörper (4) angeordnet wird, welches wenigstens folgende Schritte aufweist:
- Aufrauen eines Bereichs der Manschette (9) unter Verwendung des Fertigungsverfahrens Strahlspanen, wobei als Strahlmedium Korund-Teilchen (30) eingesetzt werden;
- Einbringen der mindestens einen Manschette (9) in das Gehäuse (2) oder anordnen der mindestens einen Manschette (9) um den Wabenkörper (4);
- Einfügen des Wabenkörpers (4) in das Gehäuse (2);
- Ausbilden von fügetechnischen Verbindungen (7).

5. Verfahren zur Herstellung eines Katalysator-Trägerkörpers (1), nach Anspruch 1 oder 2, umfassend zumindest ein Gehäuse (2) mit einer Innenseite (3) und einen Wabenkörper (4), welches wenigstens folgende Schritte aufweist:
- Vermengen und/oder Mischen eines Klebemittels (5) mit einer passivierenden Substanz (6);
- Anbringen des Klebemittels (5) mit der passivierenden Substanz (6) an der Innenseite (3) des Gehäuses (2);
- Einfügen des Wabenkörpers (4) in das Gehäuse (2);
- Ausbilden von fügetechnischen Verbindungen (7).

6. Verfahren nach Anspruch 5, bei dem die passivierende Substanz (6) pulverförmig ist, wobei es sich bevorzugt um Aluminiumoxid handelt, insbesondere mit einem mittleren Korndurchmesser (8) von 0,3 bis 1,5 µm.

7. Verfahren nach Anspruch 5 oder 6, bei dem zwischen dem Gehäuse (2) und dem Wabenkörper (4) mindestens eine Manschette (9) angeordnet wird, welche bevorzugt zunächst um den Wabenkörper (4) gelegt wird und mit diesem gemeinsam anschließend wenigstens teilweise in das Gehäuse (2) eingeführt wird.

8. Verfahren nach einem der Ansprüche 5 bis 7, bei dem das Klebemittel (5) streifenförmig, insbesondere vollständig umlaufend und vorzugsweise mit einer Breite (10) von kleiner 10mm, auf der Innenseite (3) des Gehäuses (2) aufgetragen wird.

9. Verfahren nach einem der Ansprüche 5 bis 8, bei dem das Einfügen des Wabenkörpers (4) in das Gehäuse (2) zunächst nur teilweise erfolgt und dann über wenigstens eine Stirnseite (11) des Katalysator-Trägerkörpers (1) Haftmittel (12) und/oder pulverförmiges Lot (13) eingebracht wird.

10. Verfahren nach einem der Ansprüche 5 bis 9, bei dem die fügetechnischen Verbindungen (7) während einer thermischen Behandlung gebildet werden, wobei vorzugsweise das Klebemittel (5) und das Haftmittel (12) überwiegend verdampft und insbesondere eine Passivierungsschicht (14) mit der passivierenden Substanz (6) hergestellt wird.

## Claims

1. A catalyst carrier body (1), comprising at least one housing (2) with an inside (3) and a honeycomb body (4), the honeycomb body (4) being connected to the inside (3) in a connecting region (20) by joining, and the connecting region (20) being delimited by at least one passivation layer (14) that prevents a connection of the housing (2) and the honeycomb body (4), **characterized in that** the passivation layer (14) comprises a multiplicity of separate crystal agglomerations (27) with an averaged height (30) lying in the range of 0.3 to 1.5 µm.

2. The catalyst carrier body (1) as claimed in claim 1, **characterized in that** the crystal agglomerations (27) are arranged on the inside (3) of the housing (2) or on at least one sleeve (9) which is positioned between the housing (2) and the honeycomb body (4), the inside (3) of the housing (2) respectively the sleeve (9) preferably being roughened in the region of the passivation layer (14).

3. A method for producing a catalyst carrier body (1) as claimed in claim 1 or 2, comprising at least one housing (2) with an inside (3) and a honeycomb body (4), said method having at least the following steps:
- roughening of a region of the inside of the housing and/or of the honeycomb body, using blast-cutting as the manufacturing method, corundum particles (30) being employed as the blasting medium;
- insertion of the honeycomb body (4) into the housing (2);
- formation of joining connections (7).

4. A method for producing a catalyst carrier body (1) as claimed in claim 1 or 2, comprising at least one housing (2) with an inside (3), at least one sleeve (9) and a honeycomb body (4), the at least one sleeve (9) being arranged between the housing (2) and the honeycomb body (4), said method having at least the following steps:
- roughening of a region of the sleeve (9), using blast-cutting as the manufacturing method, corundum particles (30) being employed as the blasting medium;
- introduction of the at least one sleeve (9) into the housing (2) or arrangement of the at least one sleeve (9) around the honeycomb body (4);
- insertion of the honeycomb body (4) into the housing (2);
- formation of joining connections (7).

5. A method for producing a catalyst carrier body (1) as claimed in claim 1 or 2, comprising at least one housing (2) with an inside (3) and a honeycomb body (4), said method having at least the following steps:
- blending and/or mixing of an adhesive (5) with a passivating substance (6);
- application of the adhesive (5) having the passivating substance (6) to the inside (3) of the housing (2);
- insertion of the honeycomb body (4) into the housing (2);
- formation of joining connections (7).

6. The method as claimed in claim 5, in which the passivating substance (6) is pulverulent, and is preferably aluminum oxide, in particular with a mean grain diameter (8) of 0.3 to 1.5 µm.

7. The method as claimed in claim 5 or 6, in which, between the housing (2) and the honeycomb body (4), at least one sleeve (9) is arranged, which is preferably first laid around the honeycomb body (4) and, together with the latter, is subsequently introduced at least partially into the housing (2).

8. The method as claimed in one of claims 5 to 7, in which the adhesive (5) is applied to the inside (3) of the housing (2) in the form of a strip, in particular so as to run around completely, and preferably with a width (10) smaller than 10 mm.

9. The method as claimed in one of claims 5 to 8, in which the insertion of the honeycomb body (4) into the housing (2) first takes place only partially, and bonding agent (12) and/or pulverulent solder (13) is then introduced via at least one end face (11) of the catalyst carrier body (1).

10. The method as claimed in one of claims 5 to 9, in which the joining connections (7) are formed during thermal treatment, preferably the adhesive (5) and the bonding agent (12) being predominantly evaporated, and, in particular, a passivation layer (14) being produced by means of the passivating substance (6).

## Revendications

1. Corps support de catalyseur (1) comprenant au moins un boîtier (2) avec une face intérieure (3) et un corps en nids d'abeilles (4), le corps en nids d'abeilles (4) étant relié par technique de jointoiement à la face intérieure (3) dans une région de rattachement (20) et la région de rattachement (20) étant limitée par au moins une couche de passivation (14) pour empêcher un rattachement de boîtier et de corps en nids d'abeilles, **caractérisé en ce que** la couche de passivation (14) comprend une multiplicité d'agglomérations de cristaux (27) isolées avec une hauteur moyenne (30) qui se trouve dans la région de 0,3 à 1,5 µm.

2. Corps support de catalyseur (1) selon la revendication 1, **caractérisé en ce que** les agglomérations de cristaux (27) sont agencées sur la face intérieure (3) du boîtier (2) ou sur au moins une manchette (9), qui est positionnée entre le boîtier (2) et le corps en nids d'abeilles (4), la face intérieure (3) du boîtier (2), respectivement la manchette (9), étant de préférence rendues rugueuses dans la région de la couche de passivation (14).

3. Procédé destiné à la fabrication d'un corps support de catalyseur (1) selon la revendication 1 ou 2, comprenant au moins un boîtier (2) avec une face intérieure (3) et un corps en nids d'abeilles (4), le procédé ayant au moins les étapes suivantes :
- Rendre rugueuse une région de la face intérieure du boîtier et/ou du corps en nids d'abeilles en utilisant le procédé de fabrication le corindonnage, dans quel cas des particules de corindon (30) sont utilisées en tant que médium de jet ;
- insérer le corps en nids d'abeilles (4) dans le boîtier (2) ;
- réaliser des liaisons par technique de jointoiement (7).

4. Procédé destiné à la fabrication d'un corps support de catalyseur (1) selon la revendication 1 ou 2, comprenant au moins un boîtier (2) avec une face intérieure (3), au moins une manchette (9) et un corps en nids d'abeilles (4), l'au moins une manchette (9) étant agencée entre le boîtier (2) et le corps en nids d'abeilles (4), procédé ayant au moins les étapes suivantes :
- Rendre rugueux une région de la manchette (9) en utilisant le procédé de fabrication le corindonnage, dans quel cas des particules de corindon (30) sont utilisées en tant que médium de jet ;
- rapporter l'au moins une manchette (9) dans le boîtier (2) ou agencer l'au moins une manchette (9) autour du corps en nids d'abeilles (4) ;
- insérer le corps en nids d'abeilles (4) dans le boîtier (2) ;
- réaliser des liaisons de technique de jointoiement (7).

5. Procédé destiné à la fabrication d'un corps support de catalyseur (1) selon la revendication 1 ou 2, comprenant au moins un boîtier (2) avec une face intérieure (3) et un corps en nids d'abeilles (4), procédé ayant au moins les étapes suivantes :
- mêler et/ou mélanger une colle (5) avec une substance passivante (6) ;
- rapporter la colle (5) avec la substance passivante (6) sur la face intérieure (3) du boîtier (2) ;
- insérer le corps en nids d'abeilles (4) dans le boîtier (2);
- réaliser des liaisons par technique de jointoiement (7).

6. Procédé selon la revendication 5, dans lequel la substance passivante (6) est pulvérulente, dans quel cas il s'agit de préférence d'oxyde d'aluminium, notamment avec un diamètre de grain moyen (8) de 0,3 à 1,5 µm.

7. Procédé selon la revendication 5 ou 6, dans lequel au moins une manchette (9) est agencée entre le boîtier (2) et le corps en nids d'abeilles (4), laquelle est déposée de préférence d'abord autour du corps en nids d'abeilles (4) et est ensuite introduite dans le boîtier (2) au moins partiellement et en commun avec celui-ci.

8. Procédé selon l'une des revendications 5 à 7, dans lequel la colle (5) est appliquée en forme de bande, notamment s'étendant complètement de manière périphérique et de préférence avec une largeur (10) plus petite que 10 mm, sur la face intérieure (3) du boîtier (2).

9. Procédé selon l'une des revendications 5 à 8, dans lequel l'insertion du corps en nids d'abeilles (4) dans le boîtier (2) n'est effectuée d'abord que partiellement et ensuite de l'adhésif (12) et/ou du matériau de brasure en forme de poudre (13) est rapporté à l'intermédiaire d'au moins une face frontale (11) du corps support de catalyseur (1).

10. Procédé selon l'une des revendications 5 à 9, dans lequel les liaisons par technique de jointoiement (7) sont formées durant un traitement thermique, la colle (5) et l'adhésif (12) étant de préférence évaporés en majorité et notamment une couche de passivation (14) étant fabriquée avec la substance passivante (6).
